Europäisches Patentamt

European Patent Office

Office européen des brevets

(11) Veröffentlichungsnummer: **0 157 257**
**A1**

## (12) EUROPÄISCHE PATENTANMELDUNG

(21) Anmeldenummer: **85102995.9**

(22) Anmeldetag: **15.03.85**

(51) Int. Cl.⁴: **C 08 F 283/00**, C 08 G 61/12,
C 08 G 73/06

(30) Priorität: **22.03.84 DE 3410494**

(43) Veröffentlichungstag der Anmeldung: **09.10.85**
**Patentblatt 85/41**

(84) Benannte Vertragsstaaten: **BE DE FR GB NL**

(71) Anmelder: **BASF Aktiengesellschaft,
Carl-Bosch-Strasse 38, D-6700 Ludwigshafen (DE)**

(72) Erfinder: **Naarmann, Herbert, Dr., Haardtblick 15,
D-6710 Wattenheim (DE)**
Erfinder: **Muenstedt, Heimut, Dr., An dem Altenbach 41,
D-6706 Wachenheim (DE)**
Erfinder: **Koehler, Gernot, Dr. Dipl.-Ing., Berner Weg 32,
D-6700 Ludwigshafen (DE)**

(54) **Verfahren zur Herstellung von Polypyrrol-Pfropfpolymerisaten.**

㉗ Es wird ein Verfahren zur Herstellung von Polypyrrol-Pfropfpolymerisaten durch Pfropfen von Monomeren auf Polymere, die die Polymerisation zu initiieren pflegen, beschrieben, bei dem als Polymeres Pyrrol-Polymerisate eingesetzt werden, die durch Anionen p-dotiert sind. Weiterhin betrifft die Erfindung die Verwendung derartiger Pfropfpolymerisate zur Herstellung von Formkörpern für die Elektrotechnik.

ACTORUM AG

Verfahren zur Herstellung von Polypyrrol-Pfropfpolymerisaten

Die Erfindung betrifft ein Verfahren zur Herstellung von Polypyrrol-Pfropfpolymerisaten durch Pfropfen von Monomeren auf Polymere, die die Polymerisation initiieren.

Zur Herstellung von Pfropfpolymerisaten durch Aufpfropfen von Monomeren auf Molekülketten hochmolekularer Verbindungen sind mehrere Verfahren bekannt. Diese Verfahren sind in der "Encyclopedia of Polymer Science and Technology", Volume 2 in dem Kapitel über "Block- and Graft Copolymers" auf den Seiten 485 bis 528 (Interscience Publishers 1965) beschrieben. So kann man z.B. auf Polymermoleküle durch chemische Umsetzung Gruppen einbauen, die die Polymerisation zu initiieren vermögen. Solche Gruppen sind beispielsweise Peroxygruppen oder Aluminiumhalogenalkylgruppen. Die aktiven Gruppen der so hergestellten Polymermoleküle können nun die Polymerisation von Monomeren, wie Styrol oder Olefinen auslösen. Die polymerisierenden Pfropfketten wachsen somit auf die Polymerkette auf.

Weiterhin sind elektrisch leitfähige Pyrrol-Polymerisate bekannt. So z.B. aus der US-PS 3,574,072 und den Arbeiten von A.F. Diaz et al., J.C.S.Chem. Comm. 1979, Seite 635 ff, J.C.S.Chem. Comm. 1979, Seite 854 ff. Diese elektrisch leitfähigen Pyrrol-Polymerisate werden durch anodische Polymerisation von Pyrrol in Gegenwart von Leitsalzen gebildet. Die Anionen der Leitsalze wirken als Komplexierungsmittel mit der Eigenschaft, daß das System aus Polypyrrol und Komplexierungsmittel leitfähig ist. Es ist in einer Reihe von älteren Vorschlägen und Veröffentlichungen die Verwendung elektrisch leitfähiger Pyrrol-Polymerisate in der Elektrotechnik z.B. als Schalter oder andere elektrische Bauteile beschrieben.

Die leitfähigen Pyrrol-Polymerisate fallen entweder in Form eines zusammenhängenden Films an, der die Form der Elektrode hat an der die anodische Polymerisation vorgenommen wurde. Die Pyrrol-Polymerisate können auch in feinteiliger Form erhalten werden, so daß die Teilchen der Pyrrol-Polymerisate unter Druck und bei höherer Temperatur zu Formteilen verpreßt werden können. Es hat sich jedoch gezeigt, daß die Verarbeitbarkeit dieser feinteiligen Pyrrol-Polymerisate zu wünschen übrig läßt.

Aufgabe der Erfindung ist es daher, neue Pyrrol-Pfropfpolymerisate aufzuzeigen, die durch Pfropfen von Monomeren auf Polymere, die die Polymerisation initiieren, hergestellt werden und die bessere Eigenschaften bezüglich der Verarbeitbarkeit eine bessere Verträglichkeit und Einmischbarkeit haben als die bisher bekannten leitfähigen Pyrrol-Polymerisate.

Die Aufgabe wird erfindungsgemäß gelöst durch ein Verfahren, bei dem man als Polymeres das die Polymerisation initiiert, Polypyrrol einsetzt, das durch Anionen p-dotiert ist. Die Erfindung betrifft außerdem die Verwendung der so hergestellten Pfropfpolymerisate zur Herstellung von Formkörpern, die als elektrische Leiter oder als Elektroden Verwendung finden können.

Die erfindungsgemäß einzusetzenden Pyrrol-Polymerisate werden durch Polymerisieren von Verbindungen aus der Klasse der Pyrrole erhalten. Verbindungen aus dieser Klasse sind einmal Pyrrole selbst als auch die substituierten Pyrrole, die N-Alkylpyrrole, N-Arylpyrrole, die an den C-Atomen monoalkyl- oder dialkylsubstituierten Pyrrole und die an den C-Atomen monohalogen oder dihalogen substituierten Pyrrole. Zur Herstellung der erfindungsgemäß einzusetzenden Polymerisate kann Pyrrol allein oder in Mischung mit anderen Verbindungen aus der Klasse der Pyrrole verwendet werden. Vorzugsweise verwendet man Polymerisate des unsubstituierten Pyrrols. Werden Polymerisate substituierter Pyrrole eingesetzt, so sind Polymerisate des 3,4-Dialkylpyrrols, insbesondere mit 1 bis 4 C-Atomen im Alkyl, sowie auch der 3,4-Dihalogenpyrrole, insbesondere des 3,4-Dichlorpyrrols bevorzugt.

Die Polymerisate können auch gegebenenfalls bestimmte Mengen anderer Verbindungen, die mit Pyrrolen copolymerisieren, einpolymerisiert enthalten. Als Verbindungen, die mit Pyrrolen copolymerisieren, eignen sich z.B. Cyclopentadien, Azulen und dessen Derivate, wie Benzazulen, Kajaazulen, ferner Fulven, Inden oder auch Quadratsäure. Es kommen auch heterocyclische Verbindungen in Frage, wie Imidazol, Thiazol, Furan oder Thiophen. Auch 2-Bromthiophen, 2,6-Dimethylpyrridin und Pyrazin können verwendet werden. Auch kommen Aminoaromaten wie Anilin, Phenazetin, Aminopyrrolin oder 2-Aminoanthrazen in Frage. Bezogen auf 10 Teile Pyrrol können die Polymerisate 1 bis 10 Teile der mit Pyrrol copolymerisierenden Verbindungen einpolymerisiert enthalten.

Die Polymerisate werden bevorzugt durch elektrochemische Polymerisation der Pyrrole erhalten, wobei die Polymerisation der Monomeren durch anodische Oxidation erfolgt. Es werden hierzu beispielsweise Stromdichten von 2 bis 20 $mA/cm^2$ verwendet. Es werden meistens Spannungen im Bereich von 10 bis 50 Volt angelegt. Die Polymerisation erfolgt zweckmäßig in Gegenwart von Hilfsflüssigkeiten, worin die Pyrrole löslich sind. Es können hierzu polare organische Lösungsmittel verwendet werden. Verwendet man mit Wasser mischbare Lösungsmittel, so können auch geringe Mengen Wasser zugesetzt werden. Bevorzugte Lösungsmittel sind Alkohole, Ether wie Dioxan oder auch Tetrahydrofuran, Aceton oder Acetonitril, Dimethylformamid oder n-Methylpyrrolidon.

Die Polymerisation erfolgt in Gegenwart von Komplexierungsmitteln, die auch als Leitsalze bezeichnet werden. Man versteht hierunter Salze, die als Anionen beispielsweise Verbindungen der Gruppe $BF_4^-$, $AsF_4^-$, $AsF_6^-$, $SbF_6^-$, $SbCl^-$, $PF_6^-$, $ClO_4^-$, $HSO_4^-$ und $SO_4^{2-}$ oder vorzugsweise aromatische Sulfonsäuren wie Benzolsulfonsäure oder Toluolsulfonsäure oder auch andere organische Säuren wie Benzoesäure enthalten. Die Salze enthalten als Kationen z.B. Lithium, Natrium oder Kalium. Sehr günstig sind auch die $NO^+$- und $NO_2^+$-Kationen sowie insbesondere die Onium-Kationen, vor allem des Stickstoffs und des Phosphors, etwa des Typs $R^4N^+$ und $R^4P^+$, worin R Wasserstoff und/oder niedere Alkylreste, vorzugsweise mit 1 bis 6 C-Atomen, cycloaliphatische Reste, vorzugsweise mit 6 bis 14 C-Atomen, oder aromatische Reste, vorzugsweise mit 6 bis 14 C-Atomen, bedeutet. Unter den Ammonium- und Phosphonium-Kationen sind diejenigen besonders bevorzugt, in denen R Wasserstoff und/oder einen Alkylrest mit 1 bis 4 C-Atomen darstellt. Beispielhaft für bevorzugte Onium-Kationen seien neben dem $NH_4^+$-Ion insbesondere das Tetramethylammonium-, das Tetraethylammonium-, das Tetra-n-butylammonium-, das Triphenylphosphonium- und das Tri-n-butylphosphonium-Kation genannt. Die Verwendung von Verbindungen dieser Klasse ist bekannt und nicht Gegenstand der Erfindung. Man verwendet im allgemeinen die Verbindungen in solcher Menge, daß die Pyrrol-Polymerisate zwischen 10 und 40 Mol-% Komplexierungsmittel, bezogen auf 1 Mol Pyrrol enthalten.

Nach diesen Verfahren erhält man Pyrrolpolymerisate, die mit den Anionen der Leitsalze p-dotiert sind.

Zur Herstellung der Pyrrol-Polymerisate können jedoch auch andere der bekannten Verfahren Verwendung finden. So kann man beispielsweise Pyrrol in wäßriger Lösung mit Hilfe starker Säuren, z.B. Mineralsäuren, Perchlorsäure, Fluorwasserstoffsäure oder ähnliche oder mit anorganischen Peroxiverbindungen wie Kaliumpersulfat polymerisieren. Nach dem letztgenannten Verfahren erhält man Pyrrol-Polymerisate in feinpulvriger Form. Auch bei diesen Verfahren sind Salze der oben beschriebenen Art anwesend, so daß die Pyrrol-Polymerisate mit den entsprechenden Anionen komplexiert sind.

Die für das Verfahren geeigneten komplexierten Pyrrol-Polymerisate können in unterschiedlicher Form vorliegen. So bildet sich z.B. bei der anodischen Oxidation der Pyrrole ein Polymerisat aus, das mit Anionen komplexiert ist und die Form der verwendeten Anode hat. Ist die Anode flächenförmig, bildet sich eine flächige Schicht des Polymerisates aus.

Verwendet man Verfahren zur Herstellung feinpulvriger Pyrrol-Polymerisate, so können diese feinen Pulver nach bekannten Verfahren unter Druck und Hitze zu Formkörpern verpreßt werden.

Diese durch Anionen p-dotierten Pyrrol-Polymerisate können nun die Polymerisation von Monomeren initiieren. Monomeren, deren Polymerisation durch die genannten Polymerisate initiiert wird, sind beispielsweise Olefine, wie Ethylen, Propylen oder Isobutylen. Es können auch Vinylmonomere, wie Styrol und dessen Derivate, Vinylether, wie Vinylmethylether oder bzw. alle kationisch polymerisierbaren Monomeren verwendet werden. Ferner eignen sich Monomere, die ringförmig gebundenen Sauerstoff enthalten und die unter Ringöffnung polymerisieren. Solche Monomere sind beispielsweise Epoxide, wie Ethylen-, Propylen- oder Butenoxid sowie Diepoxide, wie Butadiendiepoxid ferner eignen sich cyclische Ether wie vorzugsweise Tetrahydrofuran.

Die genannten Monomeren bilden nun Polymeräste, die auf die Polypyrrolmoleküle aufwachsen. Der Anteil des Initiators beträgt bezogen auf Pyrrol--Einheiten 1 : 1 bis 100 000 : 1, vorzugsweise 3 : 1 bis 10 000 : 1. Der Anteil der aufzupfropfenden Monomeren beträgt, bezogen auf die Gewichtsmenge des p-dotierten Polypyrrols 1 : 1 bis 100 : 1, vorzugsweise 5 : 1 bis 10 000 : 1.

Das Pfropfen der Monomeren auf die durch Anionen p-dotierten Pyrrol-Polymerisate erfolgt in einem Temperaturbereich von etwa -100°C und +80°C. Die Polymerisationstemperatur ist von der Art des Monomeren und von der Art des dotierten Pyrrol-Polymerisates abhängig. So wird z.B. auf ein mit $BF_3$-p-dotiertes Polypyrrol Ethylen bei -100°C aufgepfropft. Bei Styrol erfolgt diese Umsetzung zweckmäßig bei etwa -40°C und mit Tetrahydrofuran bei +20°C. Die Polymerisationstemperatur ist für den Polymerisationsgrad der Pfropfzweige entscheidend. So entstehen bei diesen tiefen Temperaturen Pfropfzweige mit hohem Molekulargewicht, während bei Raumtemperatur und darüber meist nur oligomere Pfropfzweige aufgepfropft werden.

Die Umsetzung kann auch in Lösungsmitteln vorgenommen werden. Vorzugsweise dienen Aliphaten, wie Hexan, Oktan oder auch höher siedende Gemische oder Fraktionen von aliphatischen Kohlenwasserstoff, außerdem sind geeignet: Cycloaliphatischen wie Cyclooktan oder auch Aromaten wie Benzol, Toluol, ferner Lösungsmittel wie chlorierte Kohlenwasserstoffe wie Methylenchlorid, Chlorbenzol, ferner Nitromethan oder Nitrobenzol.

Die nach dem erfindungsgemäßen Verfahren hergestellten Pfropfpolymerisate aus Pyrrol-Polymerisaten eignen sich als leitfähige Systeme für verschiedene Zwecke, so z.B. als Leiter in der Elektrotechnik oder als Elektroden elektrochemischer Speicher oder Batterien. Sie können auch als Mittel zur Abschirmung von Strahlen dienen.

Die nach dem erfindungsgemäßen Verfahren hergestellten Pfropfpolymerisate können z.B. Anwendung von erhöhten Temperaturen und Gruppen zu Formkörpern verpreßt werden. Man kann sie auch zusammen mit anderen Polymeren zu Formkörpern verpressen. Es ist auch möglich, die Pfropfpolymerisate mit anderen leitfähigen feinteiligen Verbindungen zu mischen und dann zu Formkörpern zu verarbeiten.

### Beispiel 1

Es wird Polypyrrol durch elektrochemisches Oxidieren eines Gemisches aus 5 Teilen Pyrrol und 3 Teilen Benzolsulfonsäure (als Dopant), die in Acrylnitril gelöst sind, bei einer Stromdichte von 2 mAmp/cm$^2$ für die Dauer von 60 Minuten an der Anode abgeschieden. Es wird ein Film einer Dicke von 45µ erhalten. Der Film wird für die Dauer von 3 Stunden im Vakuum bei 100°C getrocknet. Der Pyrrol-Polymerisatfilm hat eine Leitfähigkeit von 55 S/cm. 5 Teile dieses Polypyrrols werden mit 2 Teilen Vinylisobutylether versetzt. Bei einer Temperatur von 25°C setzt die Polymerisation ein. Nach erfolgter Polymerisation und mit Methylenchlorid und Toluol gewaschen und der Film getrocknet. Der Film hat eine Leitfähigkeit von 9 S/cm. Er besteht aus 55 Gew.% Polypyrrol, auf das 12 Gew.% Vinylisobutylen aufpolymerisiert ist (der Anteil der Benzolsulfonsäure beträgt 33 Gew.).

### Beispiele 2 bis 8

In der folgenden Übersicht werden Beispiele zusammengefaßt, die die erfindungsgemäße Herstellung der neuen Pfropfpolymerisate erläutern.

| Nr. | Polypyrrol | Dopant Art und Menge | kation. polym. Monomeren Art und Menge | spez. elektr. Leitfähigkeit S/cm |
|---|---|---|---|---|
| 2 | Film vgl. 1 | vgl. 1 | Methylvinylether 2 Teile | 0,5 |
| 3 | Film vgl. 1 | vgl. 1 | Isobuten 2 Teile | 0,2 |
| 4 | Pulver* 10 Teile | $HBF_4$ 1 Teil | Tetrahydrofuran 2 Teile | 0,8 |
| 5 | wie 4 | wie 4 | Styrol 2 Teile | 0,5 |
| 6 | wie 4 | wie 4 | Methylvinylether 2 Teile | 0,5 |
| 7 | wie 4 | wie 4 | Ethylenoxid 3 Teile | 1,5 |
| 8 | wie 4 | wie 4 | α-Methylstyrol 2 Teile | 0,1 |
| 9 | wie 4 | ⬡-SO₃H, SO₃H 1,5 Teile | Methylvinylether 3 Teile | 2,0 |

* Das Polypyrrolpulver wurde durch chemische Oxidation in 10 %ige wäßrige Lösung mit Hilfe von Natriumperdisulfat (1 : 1 mbar) abgeschieden. Das Pulver ist schwarz und sehr feinteilig. Teilchendurchmesser 0,1 bis 0,8 µm. Das Pulver wurde mit Wasser neutral gewaschen und anschließend bei 50°C 5 Stunden bei $10^{-2}$ Torr getrocknet. Zu dem Pulver wurde dann die in den Beispielen angegebene Menge Dopant zugefügt.

Patentansprüche

1. Verfahren zur Herstellung von Polypyrrol-Pfropfpolymerisaten durch Pfropfen von Monomeren auf Polymere, die die Polymerisation initiieren, dadurch gekennzeichnet, daß man als Polymeres Pyrrol-Polymerisate einsetzt, die durch Anionen p-dotiert sind.

2. Verfahren nach Anspruch 1, dadurch gekennzeichnet, daß man Monomere mit ungesättigten Doppelbindungen auf die Pyrrol-Polymerisate aufpfropft.

3. Verfahren nach Anspruch 1, dadurch gekennzeichnet, daß man ringförmig gebundenen Sauerstoff enthaltene Monomere auf Pyrrol-Polymerisate aufpfropft.

4. Verwendung der gemäß Verfahren nach Anspruch 1 hergestellten Pfropfpolymerisate zur Herstellung von Formkörpern.

## 0157257
Nummer der Anmeldung

**EUROPÄISCHER RECHERCHENBERICHT**

Europäisches
Patentamt

EP 85 10 2995

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 098 988 (BASF) <br> * Seite 3, Zeilen 24-29 * <br><br> --- | 1 | C 08 F 283/00 <br> C 08 G 61/12 <br> C 08 G 73/06 |
| D,A | US-A-3 574 072 (J.J. LOUVAR) <br><br> ----- | | |

RECHERCHIERTE SACHGEBIETE (Int. Cl.4)

C 08 F
C 08 G

Der vorliegende Recherchenbericht wurde für alle Patentansprüche erstellt.

| Recherchenort <br> DEN HAAG | Abschlußdatum der Recherche <br> 24-06-1985 | Prüfer <br> MEULEMANS R.A.M.G.G. |
|---|---|---|